# EUROPEAN PATENT APPLICATION

(11) **EP 1 564 668 A1**
(43) Date of publication of application: **17.08.2005**
(21) Application number: 05002898.4
(22) Date of filing: 11.02.2005
(51) Int. Cl.: G06F 17/60

(54) **System and method for reverse auction**

(30) Priority: 16.02.2004 JP 2004038032
(71) Applicant: DeeCorp Limited, Minatu-Ku, Tokyo 106-0047 (JP)
(72) Inventor: Furuichi, Katsuhisa c/o DeeCorp Limited, Minatu-ku, Tokyo 106-0047 (JP); Taniguchi, Kentaro c/o DeeCorp Limited, Minatu-ku, Tokyo 106-0047 (JP); Yoshikawa, Masazumi c/o DeeCorp Limited, Minatu-ku, Tokyo 106-0047 (JP)
(74) Representative: Glawe, Delfs, Moll & Partner

(57) **Abstract**

An information processing system to implement reverse auction for a price list is disclosed. The system includes a price list storage unit storing an individual transaction value when a supplier performs transaction under a reference transaction condition as a price list of a supplier, a requirement storage unit storing a tentative number of transaction times used in the reverse auction in association with the reference transaction condition; and a reverse auction unit performing the reverse auction where a bidder is a supplier and a bid price is a total amount of individual transaction values when assuming to perform the tentative number of times of transactions under each reference transaction condition with reference to the price list storage unit and the requirement storage unit.

## Description

### BACKGROUND OF THE INVENTION

### 1. Field of the Invention

The present invention relates to information processing technology for reverse auction and, particularly, to an information processing system, an information processing method, and a computer readable medium suitable for reverse auction of a product with a fixed price list, including an intangible object such as a service.

### 2. Description of Related Art

Reverse auction where a buyer has the initiative is known, which is described in Japanese Unexamined Patent Application Publication No. 2003-331158, for example. In the reverse auction, a buyer informs a plurality of suppliers of the intent to buy a product and the suppliers bid the price down. The supplier who has bid the lowest price wins the right to supply the buyer with the product as a winning bidder.

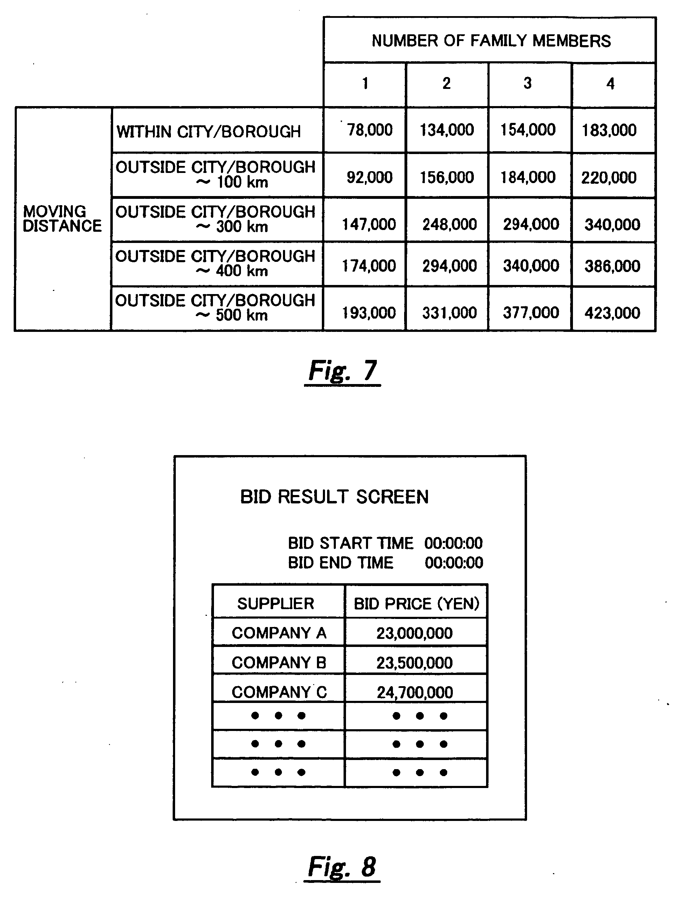

A supplier of the product often has a fixed price list for such a product as a moving service. The price list shows a corresponding relationship between transaction conditions and transaction values when performing transaction under the transaction conditions. In the case of moving service, for example, the matrix price list shown in Fig. 7 may be created by setting two transaction conditions of a moving distance and the number of family members.

Assumed transaction forms for the product with such a fixed price list are: (1) the product may be purchased in a scale above a certain level or at a certain frequency, (2) the transaction conditions may vary by product, and so on. For example, if a company pays the costs for moving of staffs due to their transfer, the company purchases the moving service in each time of the transfer in a scale above a certain level or at a certain frequency. The transaction conditions such as a moving distance and the number of family members vary by moving.

The inventors of this invention have considered the possibilities of applying the framework of the reverse auction to such a transaction form and found that the following problems exist.

A first problem is that, since the existing framework of reverse auction supposes performing the reverse auction after specifically and individually identifying a product, it is impossible to perform the reverse auction until individual transaction conditions are determined to specify a product, even if a certain scale of transaction is expected.

A second problem is that, since it is necessary to perform the reverse auction for each transaction, both a buyer and suppliers need to attend the reverse auction many times, which causes high costs and work.

### SUMMARY OF THE INVENTION

The inventors of the invention have examined the above problems and found that the above problems can be solved by performing the reverse auction for a price list itself, not for each individual transaction.

An object of the present invention is thus to provide a new framework to implement the reverse auction for a price list.

According to one aspect of the present invention, there is provided an information processing system to implement reverse auction for a price list which includes a price list storage unit storing as a price list a reference transaction condition specifying a detail of transaction for reverse auction and an individual transaction value when performing transaction under the reference transaction condition; a requirement storage unit storing a tentative number of transaction times used in the reverse auction in association with the reference transaction condition; and a reverse auction unit performing the reverse auction where a bidder is a supplier and a bid price is a total amount of individual transaction values when assuming to perform the tentative number of times of transactions under each reference transaction condition with reference to the price list storage unit and the requirement storage unit.

Use of the framework to implement the reverse auction for the price list allows early hosting of the reverse auction without waiting until the timing when actual individual transaction is performed or when the transaction conditions of individual transaction is determined. Further, since it requires a buyer to only one-time reverse auction for the price list, the buyer can save procurement costs. Furthermore, since it eliminates the need for performing reverse auction for each product to reduce the number of times to perform reverse auction, both the suppliers and buyer can save costs and work. In addition, though it is difficult to estimate a future transaction value or a bid-winning price in the future reverse auction if performing the reverse auction for each individual transaction, this embodiment allows estimating the future transaction value based on the price list determined by the reverse auction, resulting in accurate estimated costs.

The present invention provides a new framework to implement the reverse auction for a price list.

In this specification, the word "means" does not merely mean physical means, but includes the case of implementing the function of the means by software. Further, the function of one means may be implemented by two or more physical means, and the function of two or more means may be implemented by one physical means.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a block diagram showing the schematic configuration of a reverse auction (RA) system;
Fig. 2 is a block diagram showing the hardware configuration of an information processing system;
Fig. 3 is a block diagram showing the functional configuration of the information processing system;
Figs. 4A and 4B are tables to describe the data structure of price list storage means;
Fig. 5 is a table to describe the data structure of RA requirement storage means;
Fig. 6 is a flow chart to describe the framework of RA in a first embodiment;
Fig. 7 is a table to describe an example of a price list generally used by a supplier;
Fig. 8 is a table to describe an example of a bid result list screen;
Figs. 9A and 9B are tables to describe the case of determining RA requirements based on a purchase record; and
Fig. 10 is a flowchart to describe the framework of RA in a second embodiment.

### DESCRIPTION OF THE PREFERRED EMBODIMENTS

Preferred embodiments of the present invention are described hereinafter with reference to the drawings.

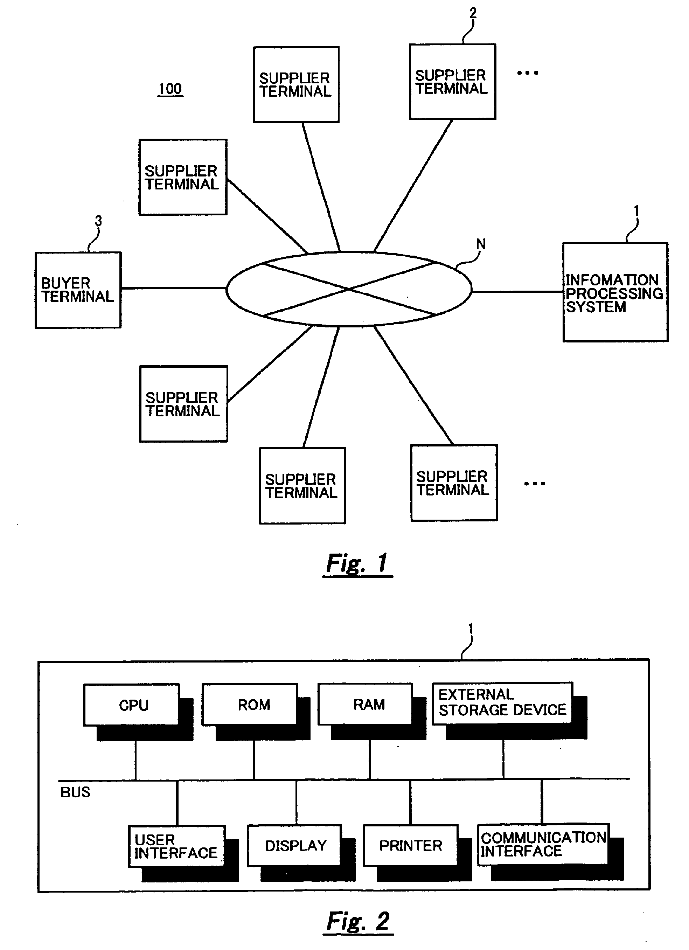

Fig. 1 is a block diagram showing the schematic configuration of a reverse auction (RA) system 100 according to an embodiment of the invention. The RA system 100 has an information processing system 1 and information processing terminals 2 and 3. The information processing system 1 performs RA processing or the like. Each information processing terminal 2 corresponds to a supplier who is a candidate for a product seller. The supplier is an individual, a company, and so on who attends the reverse auction as a bidder. Each information processing terminal 3 corresponds to a buyer who wishes to obtain, purchase and so on a product. The buyer is an individual, a company, and so on who attends the reverse auction as a host. The information processing system 1 and the information processing terminals 2 and 3 can communicate with each other over a communication network N. The communication network N may be LAN, internet, private line, packet communication network, or a combination of these, including both wired and wireless network.

Such an RA system may be configured using conventional technology of Web application server system, for example. In this case, the information processing system 1 serves as a Web server, an application (AP) server, and a data base server, and the information processing terminals 2 and 3 serve as clients. The information processing system 1 receives a given request about RA transmitted based on the HTTP protocol, for example, from each information processing terminal 2 and 3. Receiving the request about RA, the information processing system 1 performs the processing according to the request and transmits the processing result about RA to the information processing terminals 2 and 3. Each information processing terminal 2 and 3 has a Web browser or the like. The terminal 2 and 3 transmits a given request about RA to the information processing system 1 according to the control of a user, receives the processing result about RA and displays the result on the Web browser.

Fig. 2 is a block diagram showing the hardware configuration of the information processing system 1. The information processing system 1 may be composed of a general-purpose computer that has hardware such as CPU, ROM, RAM, external storage device, user interface, display, printer, and communication interface. The information processing system 1 may be composed of a single computer or a plurality of computers distributed on a network.

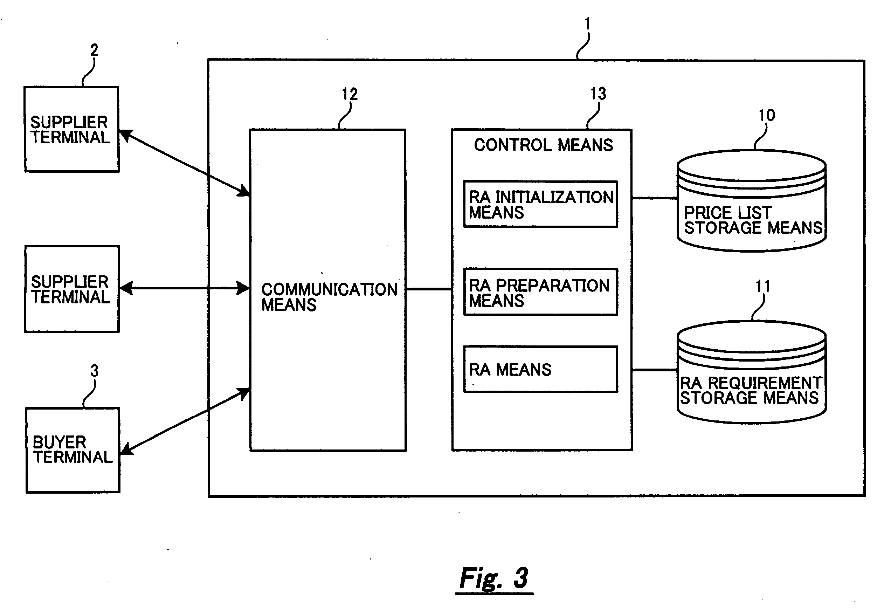

Fig. 3 is a block diagram showing the functional configuration of the information processing system 1. The information processing system 1 includes function means such as price list storage means 10, RA requirement storage means 11, communication means 12, and control means 13. Each function means is implemented by executing in the CPU a given program stored in the ROM, RAM, external storage device and so on, such as a program defining an information processing method of this invention.

The information processing terminals 2 and 3 each has an input device such as a key board and an output device such as a display and a printer. The terminals 2 and 3 thereby receive inputs from a user and output information to the user. The user may be a supplier, a system operator, a reverse auction host, a buyer, and so on. The information processing terminals 2 and 3 may be a general personal computer or a mobile computer. The information processing terminals 2 and 3 may be configured as a part of the information processing system 1.

The operation of the RA system 100 is described hereinafter in detail. In this invention, a product to be auctioned, which includes an intangible object such as service, may be determined according to design. The following embodiments describe the case of moving service as an example.

### First Embodiment

The price list storage means 10 stores a price list of a supplier, which is a moving company in this case, who attends reverse auction. The price list contains a corresponding relationship between a reference transaction condition and an individual transaction value when the supplier performs transaction under the reference transaction condition before starting the reverse auction, which is referred to hereinafter as "pre-RA individual transaction value". Such a data structure may be created by using conventional database technology such as a relational database.

The reference transaction condition may be determined according to design as long as it can quantitatively identify a condition as a general rule. It is possible to use a non-quantitative condition as a reference transaction condition if it can individually identify a condition, such as the presence or absence of packing service, cleaning service and so on accompanying the moving. Further, the reference transaction condition may include not only a single kind of transaction condition but also two or more kinds of transaction conditions. In this embodiment, the reference transaction condition includes two kinds of transaction conditions: a moving distance and the number of family members.

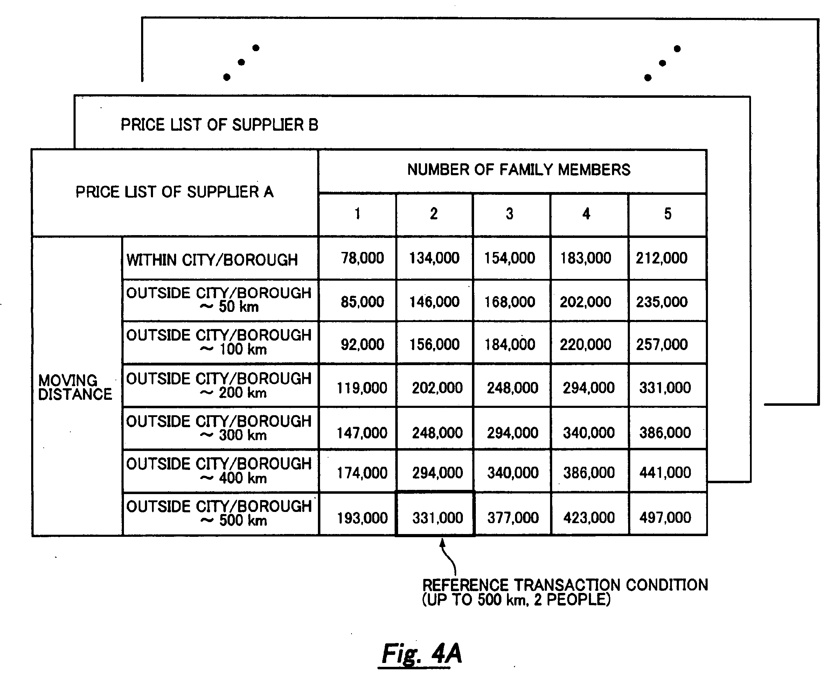

The price list of each supplier stored in the price list storage means 10 conceptually has a table structure shown in Fig. 4A. In this embodiment, the price list has a matrix structure including two transaction conditions with a moving distance on the vertical axis and the number of family members on the horizontal axis. Specifically, the list quantitatively identifies a plurality of transaction conditions such as the moving distance of 50 km, 100 km, and so on and the number of family members of one people, two people, and so on. The condition of the moving distance, however, includes a non-quantitative condition of within city or borough as well.

As shown in the table, a combination of the two transaction conditions, which is a cell of the matrix, is a reference transaction condition, and a pre-RA individual transaction value is stored in association with each reference transaction condition. For example, in the case of the supplier A shown in Fig. 4A, the pre-RA individual transaction value of 331,000 yen is associated with the reference transaction condition (moving distance; number of family members)=(up to 500 km; two people).

The RA requirement storage means 11 stores a tentative number of transaction times, which is referred to hereinafter as "the number of RA transaction times", used for specifying a bid price in association with the reference transaction condition as a requirement for the reverse auction to be performed.

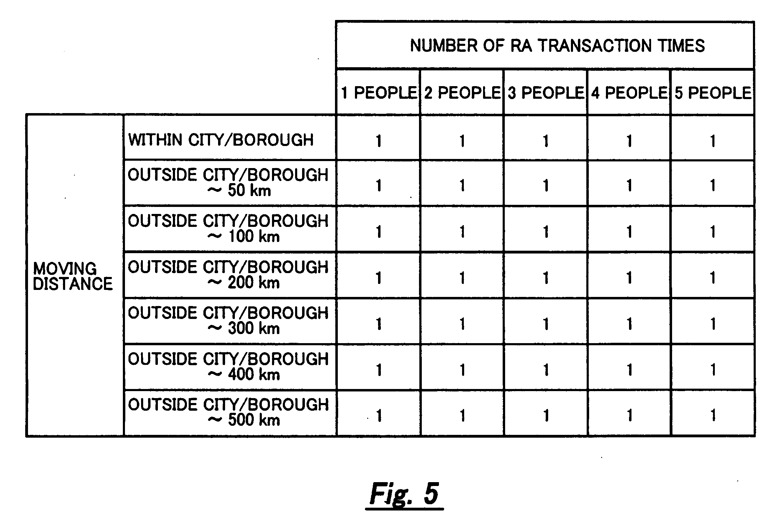

Fig. 5 conceptually shows the data structure of the RA requirement storage means 11. Just like the price list storage means 10, such a data structure may be created by using conventional database technology such as a relational database.

The number of RA transaction times may vary by reference transaction condition, and it can be determined arbitrarily according to design. For example, the number of RA transaction times may be determined according to a buyer's past purchase record. This allows performing suitable reverse auction according to the purchase trend of the buyer. In the first embodiment, the number of RA transaction times is set to 1 for all the reference transaction conditions as shown in the table of Fig. 5.

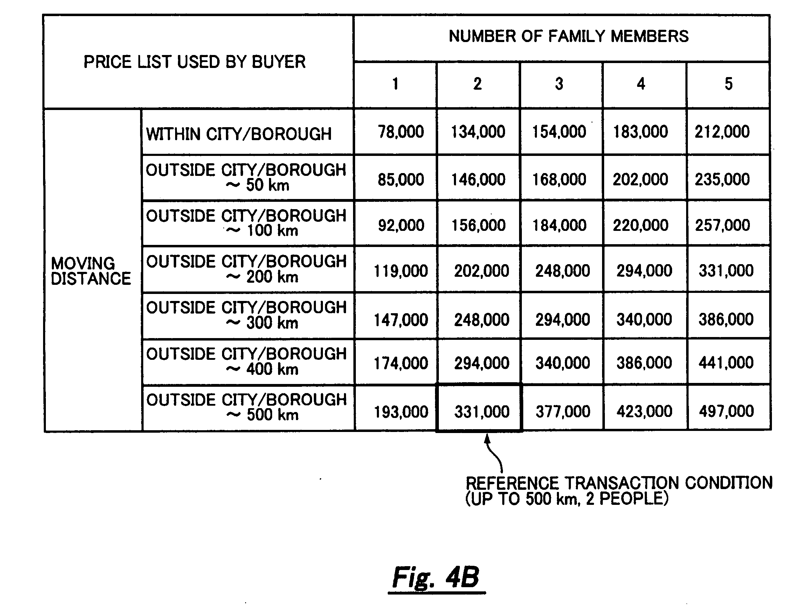

The table structure and the data structure of Figs. 4 and 5 are just an example, and another table structure or data structure may be used. For example, since each table has the data structure that stores information for each reference transaction condition, it is possible to store information in one table searchable with a reference transaction condition as a key.

The communication means 12 can input or output information to or from the information processing terminals 2 and 3, i.e. the suppliers and the buyer, over the communication network N. For example, it has a communication module such as a PPP driver and a TCP/IP driver.

The control means 13 controls the operation of the entire information processing system 1 and performs RA initialization, RA preparation, RA processing, and so on. Fig. 3 illustrates these processing performed in the control means 13 as function means. The control means 13 performs various processing in addition to the above processing, such as user registration for suppliers and buyers.

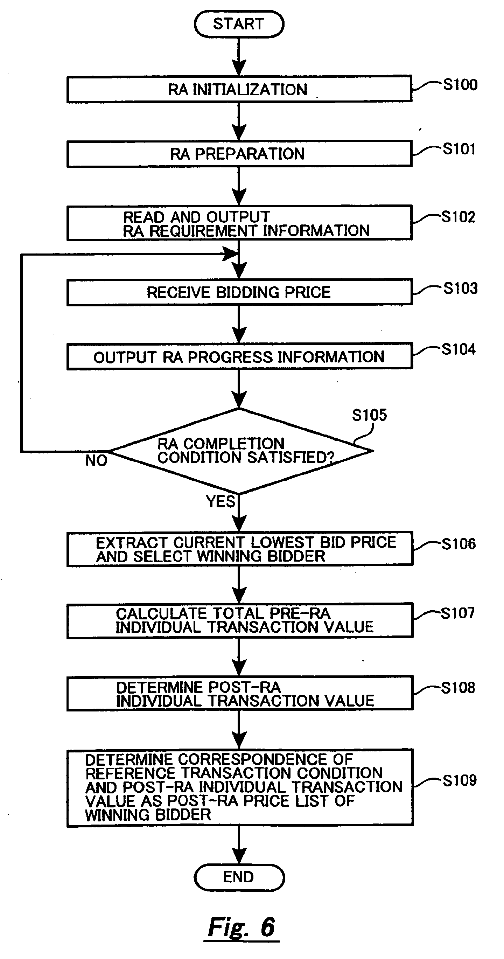

The framework of the reverse auction implemented by the information processing system 1 is described hereinafter with reference to the flowchart of Fig. 6. It is possible to arbitrarily change the order of the steps or perform the steps in parallel as long as it is consistent with the contents of processing.

The control means 13 performs a series of processing steps below in response to a start command from a reverse auction host if necessary information is stored in the RA requirement storage means 11 or the like.

First, the control means 13 performs RA initialization (S100).

The RA initialization process stores a pre-RA individual transaction value of each supplier in the price list storage means 10.

The control means 13 receives the pre-RA individual transaction value from the supplier and stores it into a corresponding area of the price list storage means 10. It is possible that an operator of the RA system 100, a reverse auction host and so on obtains necessary information from a supplier and inputs the information to the information processing system 1 via a user interface, for example, for the supplier.

There may be a supplier who does not specify a pre-RA individual transaction value corresponding to a reference transaction condition in the price list. For example, if a supplier normally uses the price list shown in Fig. 7, the pre-RA individual transaction value is not set for a reference transaction condition such as (moving distance; number of family members)=(200 km; three people). In such a case, it is necessary to register a proper value accepted by the supplier as the pre-RA individual transaction value in the price list storage means 10. In this case, instead that the supplier or the like directly registers the value, it is possible to calculate an unregistered pre-RA individual transaction value by interpolate calculation based on the registered pre-RA individual transaction value for the reference transaction condition.

Then, the control means 13 performs RA preparation (S101).

The RA preparation processing is to authorize the suppliers to attend the reverse auction and determine if a predetermined RA starting condition such as a time or the number of authorized suppliers is satisfied.

The authorization processing is to determine if those who request to use the information processing system 1 are an authorized user such as a supplier, a buyer, a system operator, an RA host and so on who are approved to attend RA. The authorization process may use known authorization technology such as electronic authentication based on password matching, fingerprint matching, and so on. Since use of a password matching only can cause unauthorized access due to password leakage, it is preferred to use biometric matching such as fingerprint or use these matching techniques in combination.

If the control means 13 determines in the RA preparation step that a predetermined RA starting condition is satisfied, it performs the RA processing (S102 to S109).

The RA processing is to perform reverse auction where a bidder is each supplier, and a bid price is a total amount of individual transaction values when assuming to perform the RA transaction times of transactions under each reference transaction condition.

The control means 13 first reads RA requirement information such as {((moving distance; number of family members) ; number of RA transaction times) ... .} and outputs the information to the suppliers who attend the reverse auction (S102). The RA requirement information may include various information other than the reference transaction information and the number of RA transaction times, such as a bid starting price. The bid starting price may be determined based on the price list of the supplier presently trading with the buyer so as to reduce costs than the present conditions.

Receiving the RA requirement information, each supplier knows the requirements of the current reverse auction and thereby determines a bid price, which is a total amount of individual transaction values when assuming to perform the RA transaction times of transactions under each reference transaction condition.

Then, the control means 13 receives bid prices from the suppliers (S103). The bid price from each supplier is stored in association with the supplier into a given storage means. If the control means 13 receives a bid price again from the supplier who has already submit the bid price, it preferably checks if the re-bid price is lower than the previous bid price and updates the stored data in the storage means only if the re-bid price is lower. This is because the reverse auction should not accept the input that increases the bid price. In the case of setting the bid starting price, a bid price higher than the bid starting price is not stored in the storage means.

The control means 13 may refer to the predetermined storage means and output the bid status during or upon completion of the RA to the buyer or the like using a bid result screen shown in Fig. 8, for example.

After that, the control means 13 outputs progress information of the reverse auction to each supplier at a predetermined timing such as upon receiving a bid price from any supplier or periodically with a certain interval (S104). The RA progress information includes the information showing the possibility of the designated supplier winning the bid, such as information of whether the bid price of the supplier is the lowest bid price, the ranking of the supplier when listing the bid prices from the lowest price to the highest, the current lowest bid price, the bid price of the supplier, and so on. When outputting the RA progress information that includes information on the bid price, it is preferred not to supply the information of the supplier who has submitted the bid price for fairness.

Then, the control means 13 determines if a predetermined RA termination condition, such as a time or the passing of a certain time period without receiving any bid price from suppliers, is satisfied (S105). If the condition is not satisfied, the process returns to the step S103. Setting the RA termination condition may arbitrarily use various schemes used in conventional reverse auctions, such as a scheme that automatically extends the bid time upon receiving a bid.

On the other hand, if determining that the RA termination condition is satisfied, the control means 13 refers to the storage means storing the bid price, extracts the current lowest bid price as a bid-winning price, and selects at least the supplier corresponding to the bid-winning price as a winning bidder (S106).

Then, the control means 13 calculates a total amount of pre-RA individual transaction values assuming that the winning bidder performs the RA transaction times of transactions under each reference transaction condition before the reverse auction, with reference to the price list storage means 10 and the RA requirement storage means 11 (S107).

For example, it is assumed that the price list of the winning bidder stored in the price list storage means 10 is {(reference transaction condition 1; pre-RA individual transaction value 1), (reference transaction condition 2; pre-RA individual transaction value 2), ... (reference transaction condition n; pre-RA individual transaction value n)}, and the RA requirement stored in the RA requirement storage means 11 is {(reference transaction condition 1; number of RA transaction times 1), (reference transaction condition 2; number of RA transaction times 2), ... (reference transaction condition n; number of RA transaction times n) }. In this case, a total amount of pre-RA individual transaction values is calculated by the following formula (1):

Total amount of pre-RA individual transaction values = (pre-RA individual transaction value 1 * number of RA transaction times 1) + (pre-RA individual transaction value 2 * number of RA transaction times 2) + ... + (pre-RA individual transaction value n * number of RA transaction times n)

The control means 13 then determines an individual transaction value, which is referred to hereinafter as "post-RA individual transaction value, when the winning bidder performs transaction under the reference transaction condition for each transaction condition after the reverse auction (S108) so as to satisfy the following formula (2):

Post-RA individual transaction value ≤ (pre-RA individual transaction value * bid-winning price / total amount of pre-RA individual transaction values)

In the formula (2), the term (bid-winning price/total amount of pre-RA individual transaction values) corresponds to a discount rate of the winning bidder supplier. Further, when determining the value so as to satisfy the equation of the formula (2), a total amount of post-RA individual transaction values when assuming to perform the RA transaction times of transactions under each reference transaction condition after the reverse auction equals to the bid-winning price.

Finally, the control means 13 determines the corresponding relationship between the reference transaction conditions and the post-RA individual transaction values determined in the above steps as a post-RA price list of the winning bidder (S109).

This embodiment sets reference transaction conditions and the number of RA transaction times and performs the reverse auction for a price list specifying the corresponding relationship between the reference transaction condition and an individual transaction price, thereby obtaining the price list of a winning bidder.

Use of the framework to implement the reverse auction for the price list allows early hosting of the reverse auction without waiting until the timing when actual individual transaction is performed or when the transaction conditions of individual transaction is determined. Further, since it requires a buyer to only one-time reverse auction for the price list, the buyer can save procurement costs. Furthermore, since it eliminates the need for performing reverse auction for each product to reduce the number of times to perform reverse auction, both the suppliers and buyer can save costs and work. In addition, though it is difficult to estimate a future transaction value or a bid-winning price in the future reverse auction if performing the reverse auction for each individual transaction, this embodiment allows estimating the future transaction value based on the price list determined by the reverse auction, resulting in accurate estimated costs.

### Second Embodiment

The information processing system 1 according to a second embodiment of the invention has the price list storage means 10, the RA requirement storage means 11, the communication means 12, the control means 13, and the information processing terminals 2 and 3 as shown in Fig. 3, just like that of the first embodiment. The configuration of each means is basically the same as in the first embodiment.

The second embodiment is different from the first embodiment in that an individual transaction value stored in the price list storage means 10 is the same as a pre-RA individual transaction value at the start of the RA processing but is updated as needed according to the input from suppliers as the RA processing progresses.

Further, the second embodiment is different from the first embodiment also in that the reference transaction condition and the number of RA transaction times are set based on a buyer's purchase record in a certain past period, which is transaction conditions used in the past transactions in a certain period and the number of transaction times.

For example, to set a reference transaction condition based on a purchase record, a reference transaction condition stored in the price list storage means 10 and the RA requirement storage means 11 may be set to include at least a reference transaction condition under which purchase has been made in the past.

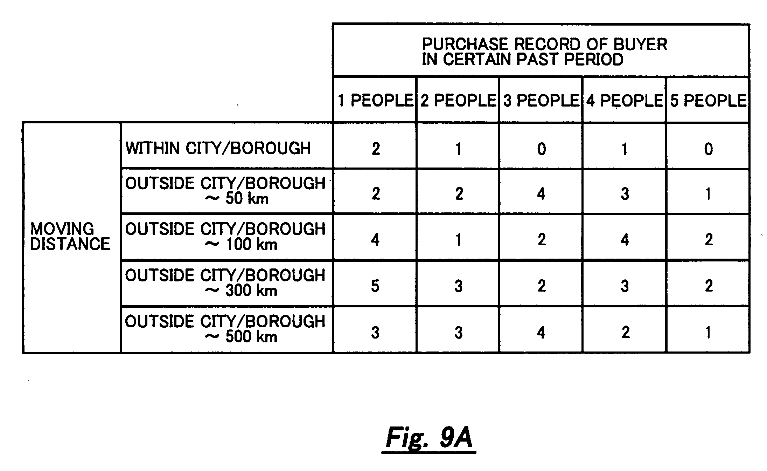

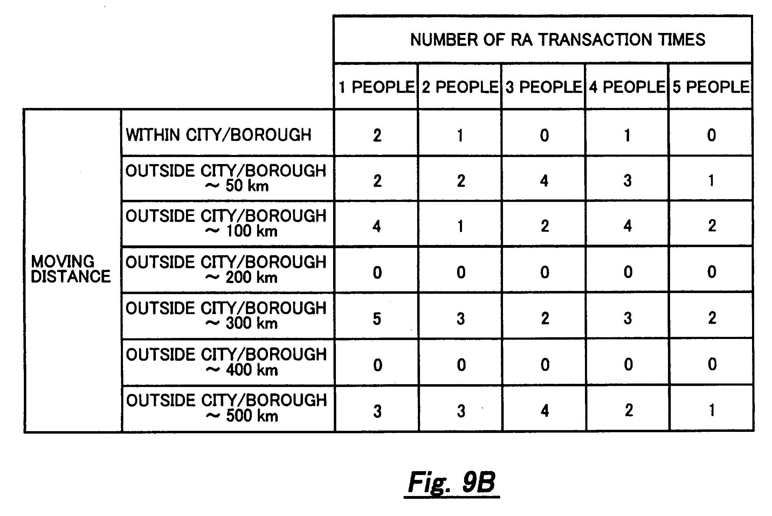

For another example, to set the number of RA transaction times based on a purchase record, if a buyer's purchase record in a certain past period is as shown in Fig. 9A, the number of RA transaction times shown in Fig. 9B may be set to the RA requirement storage means 11. In this example, for the reference transaction conditions under which the transaction has been performed in the past, such as (moving distance; number of family members) = (100km; one people), the past record value is set as the number of RA transaction times. On the other hand, for the reference transaction conditions under which no transaction has been performed before, such as (moving distance; number of family members) = (200km; three people), the value 0 is set to the number of RA transaction times.

The method for setting the number of RA transaction times based on the purchase record is not limited to the above. For example, if the purchase record value is five times for the reference transaction condition (moving distance; number of familymembers) = (300km; three people), the record value of five times may be allocated to two or more reference transaction conditions such as (moving distance; number of family members)=(300km; three people) (200km; two people).

If the RA requirement storage means 11 is configured based on the purchase record, the RA requirement storage means 11 serves also as purchase record storage means.

In this embodiment, the RA processing performed by the control means 13 is also different from that in the first embodiment.

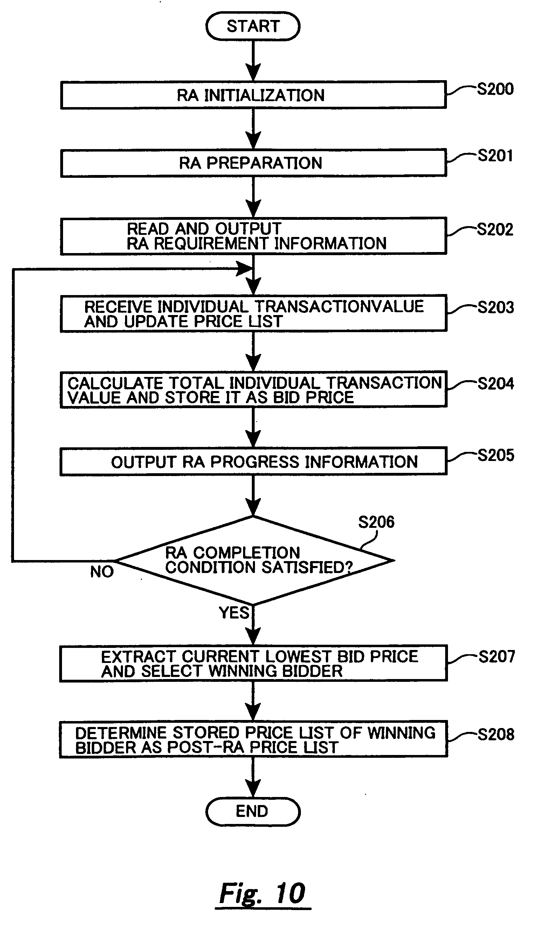

The framework of the reverse auction in the second embodiment is described hereinafter with reference to the flowchart of Fig. 10. It is possible to arbitrarily change the order of the steps or perform the steps in parallel as long as it is consistent with the contents of processing.

The control means 13 performs a series of processing steps below in response to a start command from a reverse auction host if necessary information is stored in the RA requirement storage means 11.

The steps S200 and S201 are the same as S100 and S101 of the first embodiment,

If the control means 13 determines in the RA preparation processing that a predetermined RA starting condition is satisfied, it performs the RA processing (S202 to S208).

The control means 13 first reads RA requirement information such as {((moving distance; number of family members); number of RA transaction times) ... .} and outputs the information to the suppliers (S202). The RA requirement information may include various information in addition to the reference transaction information and the number of RA transaction times, such as a bid starting price. Each supplier is thereby informed of the requirements for the current reverse auction, and indirectly determines a bid price by inputting an individual transaction value while specifying any of individual reference transaction conditions. The bid price is a total amount of individual transaction values when assuming to perform the RA transaction times of transactions under each reference transaction condition.

Next, the control means 13 receives any of an individual transaction value, specifying any of reference transaction conditions. Based on the received individual transaction value, the control means 13 updates a price list corresponding to the supplier stored in the price list storage means 10, which is an individual transaction value corresponding to the specified reference transaction condition (S203). It is preferred that the control means 13 checks if the received individual transaction value is lower than the corresponding individual transaction value stored in the price list storage means 10, and updates the data only if it is lower. This is because the reverse auction should not accept the input that increases the bid price.

After that, at a predetermined timing such as upon receiving a bid price from any supplier or periodically with a certain interval, the control means 13 calculates a total amount of individual transaction values when assuming to perform the RA transaction times of transactions under each reference transaction condition for the supplier whose price list has been updated (for all the suppliers in the first time) with reference to the price list storage means 10 and the RA requirement storage means 11, and stores or updates the amount as a bid price of the supplier in the storage means (S204).

For example, it is assumed that the price list of the supplier stored in the price list storage means 10 is {(reference transaction condition 1; individual transaction value 1), (reference transaction condition 2; individual transaction value 2), ... (reference transaction condition n; individual transaction value n) }, and the RA requirement stored in the RA requirement storage means 11 is {(reference transaction condition 1; number of RA transaction times 1), (reference transaction condition 2; number of RA transaction times 2), ... (reference transaction condition n; number of RA transaction times n)}. In this case, a total amount of individual transaction values is calculated by the following formula (3):

Total amount of individual transaction values = (individual transaction value 1 * number of RA transaction times 1) + (individual transaction value 2 * number of RA transaction times 2)+...+(individual transaction value n * number of RA transaction times n)

Then, the control means 13 outputs progress information of the RA to each supplier at a predetermined timing such as upon update a bid price or periodically with a certain interval (S205). The RA progress information includes the information showing the possibility of the designated supplier winning the bid just like in the first embodiment. When outputting the lowest bid price, it is preferred not to supply the information on the supplier who has submitted the bid lowest price for fairness.

Then, the control means 13 determines if a predetermined RA termination condition, such as a time or the passing of a certain time period without receiving any bid price from suppliers, is satisfied (5206). If the condition is not satisfied, the process returns to the step S203. Just like in the first embodiment, setting the RA termination condition may arbitrarily use various schemes used in conventional reverse auctions, such as a scheme that automatically extends the bid time upon receiving a bid.

On the other hand, if determining that the RA termination condition is satisfied, the control means 13 refers to the storage means storing the bid price, extracts the current lowest bid price as a bid-winning price, and selects at least the supplier corresponding to the bid-winning price as a winning bidder (S207).

Finally, the control means 13 determines the price list of the winning bidder at the end of the reverse auction stored in the price list storage means 10 as a post-RA price list of the winning bidder (S208).

Since the second embodiment has the advantage that allows performing the reverse auction while updating an individual transaction value for each reference transaction condition in addition to the advantages of the first embodiment, suppliers can bid with a more flexible price list. Further, since this embodiment sets reference transaction conditions and the number of RA transaction times to configure the price list storage means 10 and the RA requirement storage means 11 based on a buyer's purchase record, it is possible to appropriately reflect the purchase tendency of a buyer in the price list bid in the reverse auction. This allows the buyer to obtain the price list in which prices are reasonably low according to the own purchase tendency in the reverse auction, which maximizes the effect of reducing procurement costs.

### OTHER EMBODIMENTS

The embodiments of the invention are not restricted to those described above but may be varied in many ways. For example, though the above embodiments select the supplier corresponding to the lowest bid price as a winning bidder, it is possible to select a plurality of suppliers in the upper ranking from the lowest price as winning bidders and determine a price list for each of them. It is also possible to select a plurality of suppliers in the upper ranking from the lowest price as winning bidders, and a buyer selects one from them to determine the final winning bidder with reference to information about the suppliers such as a company size and sales performance.

Further, though the above embodiment describes the reverse auction for the price list of a single kind of product, moving service, the present invention is not limited thereto, and the reverse auction may be performed for the price list of a plurality of kinds of product in one package. In this case, the contents of the package or the variety of the products may be set as a reference transaction condition.

Furthermore, for example, since the first embodiment sets the number of RA transaction times=1 for all the reference transaction conditions, if the RA processing is configured to calculate a total amount of individual transaction values in the case of performing one-time transaction for each reference transaction condition, it is possible to omit the RA requirement storage means 11. In this case, since the RA requirement is included in the program executed by the control means 13, storage means that stores the program corresponds to the RA requirement storage means 11.

Though the first embodiment explains the case where the price list storage means 10 stores a price list for each supplier as shown in Fig. 4A, this invention is not limited thereto. For example, the price list storage means 10 may store a price list already used by a buyer, which is the price list of the supplier who has traded with the buyer in the past, for example, or a price list created by standardizing the above price list to match reference transaction conditions as shown in Fig. 4B. In this case, the control means 13 calculates in the step S107 a total amount of pre-RA individual transaction values of a constant value regardless of a winning bidder, which is, when assuming that a buyer performs the RA transaction times of transactions under each reference transaction condition before the reverse auction.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An information processing system to implement reverse auction for a price list, comprising:
a price list storage unit storing as a price list a reference transaction condition specifying a detail of transaction for reverse auction and an individual transaction value when performing transaction under the reference transaction condition;
a requirement storage unit storing a tentative number of transaction times used in the reverse auction in association with the reference transaction condition; and
a reverse auction unit performing the reverse auction where a bidder is a supplier and a bid price is a total amount of individual transaction values when assuming to perform the tentative number of times of transactions under each reference transaction condition with reference to the price list storage unit and the requirement storage unit.

2. The information processing system of claim 1, wherein
the individual transaction value stored in the price list storage unit is a pre-auction individual transaction value when performing transaction before the reverse auction under the reference transaction condition, and
the reverse auction unit comprises:
a condition output unit outputting the reference transaction condition to a supplier,
a storage unit receiving a bid including a bid price from a supplier and storing it in a storage section,
a progress output unit outputting progress information of the reverse auction to a supplier,
a selection unit selecting a supplier corresponding to a current lowest bid price as a winning bidder if a predetermined reverse auction termination condition is satisfied,
a calculation unit calculating a total amount of the pre-auction individual transaction values when assuming to perform the tentative number of times of transactions under each reference transaction condition before the reverse auction with reference to the price list storage unit and the requirement storage unit,
a value determination unit determining a post-auction individual transaction value when the winning bidder performs transaction after the reverse auction under the reference transaction condition so as to satisfy a following formula (1) :
a post-auction individual transaction value ≤ (a pre-auction individual transaction value * a bid-winning price / a total amount of pre-auction individual transaction values), and
a price list determination unit determining the post-auction individual transaction value determined to satisfy the reference transaction condition and the formula (1) as a price list after the reverse auction.

3. The information processing system of claim 1, wherein
the price list storage unit stores a price list for each supplier attending the reverse auction, and
the reverse auction unit comprises:
a condition output unit outputting the reference transaction condition to a supplier,
an update unit receiving an individual transaction value by specifying any of the reference transaction condition and updating a price list corresponding to the supplier stored in the price list storage unit based on the received individual transaction value,
a calculation unit calculating as a bid price a total amount when assuming to perform the tentative number of times of transactions with the individual transaction value under each supplier with reference to the price list storage unit and the requirement storage unit,
a progress output unit outputting progress information of the reverse auction to a supplier,
a selection unit selecting a supplier corresponding to a current lowest bid price as a winning bidder if a predetermined reverse auction termination condition is satisfied, and
a determination unit determining a price list of the winning bidder stored in the price list storage unit at an end of the reverse auction as a price list after the reverse auction.

4. The information processing system of claim 3, wherein the update unit updates the price list corresponding to the supplier only if an individual transaction value from the supplier is lower than a corresponding individual transaction value stored in the price list storage unit.

5. The information processing system of claim 1, wherein the tentative number of transaction times is set to 1 for all reference transaction conditions in the requirement storage unit.

6. The information processing system of claim 1, wherein the tentative number of transaction times is determined based on a buyer's purchase record in a certain past period in the requirement storage unit.

7. An information processing method to implement reverse auction for a price list, comprising:
(a) storing as a price list a reference transaction condition specifying a detail of transaction for reverse auction and an individual transaction value when performing transaction under the reference transaction condition;
(b) storing a tentative number of transaction times used in the reverse auction in association with the reference transaction condition; and
(c) receiving a bid including a bid price that is a total amount of individual transaction values when assuming to perform the tentative number of times of transactions under each reference transaction condition and determining a supplier submitting a lowest bit price as a winning bidder.

8. The information processing method of claim 7, wherein
the individual transaction value is a pre-auction individual transaction value when performing transaction before the reverse auction under the reference transaction condition, and
the step (c) comprises:
outputting the reference transaction condition to a supplier,
receiving and storing a bid including a bid price from a supplier,
outputting progress information of the reverse auction to a supplier,
selecting a supplier corresponding to a current lowest bid price as a winning bidder if a predetermined reverse auction termination condition is satisfied,
calculating a total amount of the pre-auction individual transaction values when assuming to perform the tentative number of times of transactions under each reference transaction condition before the reverse auction,
determining a post-auction individual transaction value when the winning bidder performs transaction after the reverse auction under the reference transaction condition so as to satisfy a following formula (1):
a post-auction individual transaction value ≤ (a pre-auction individual transaction value * a bid-winning price / a total amount of pre-auction individual transaction values), and
determining the post-auction individual transaction value determined to satisfy the reference transaction condition and the formula (1) as a price list after the reverse auction.

9. The information processing method of claim 7, wherein
the step (a) stores a price list for each supplier attending the reverse auction, and
the step (c) comprises:
outputting the reference transaction condition to a supplier,
receiving an individual transaction value from a supplier by specifying any of the reference transaction condition and updating a price list corresponding to the supplier based on the received individual transaction value,
calculating as a bid price a total amount when assuming to perform the tentative number of times of transactions with the individual transaction value for each supplier,
outputting progress information of the reverse auction to a supplier,
selecting a supplier corresponding to a current lowest bid price as a winning bidder if a predetermined reverse auction termination condition is satisfied, and
determining the price list stored in association with the supplier selected as a winning bidder as a price list after the reverse auction.

10. The information processing method of claim 7, wherein the tentative number of transaction times is set to 1 for all reference transaction conditions.

11. The information processing method of claim 7, wherein the tentative number of transaction times is determined based on a buyer' s purchase record in a certain past period.

12. A computer-readable medium to perform reverse auction for a price list, the medium including instructions executed by a processor of a computer for causing the computer to implement a method comprising:
(a) storing as a price list a reference transaction condition specifying a detail of transaction for reverse auction and an individual transaction value when performing transaction under the reference transaction condition;
(b) storing a tentative number of transaction times used in the reverse auction in association with the reference transaction condition; and
(c) receiving a bid including a bid price that is a total amount of individual transaction values when assuming to perform the tentative number of times of transactions under each reference transaction condition and determining a supplier submitting a lowest bit price as a winning bidder.

13. The computer-readable medium of claim 12, wherein
the individual transaction value is a pre-auction individual transaction value when performing transaction before the reverse auction under the reference transaction condition, and
the step (c) comprises:
outputting the reference transaction condition to a supplier,
receiving and storing a bid including a bid price from a supplier
outputting progress information of the reverse auction to a supplier,
selecting a supplier corresponding to a current lowest bid price as a winning bidder if a predetermined reverse auction termination condition is satisfied,
calculating a total amount of the pre-auction individual transaction values when assuming to perform the tentative number of times of transactions under each reference transaction condition before the reverse auction,
determining a post-auction individual transaction value when the winning bidder performs transaction after the reverse auction under the reference transaction condition so as to satisfy a following formula (1):
a post-auction individual transaction value ≤ (a pre-auction individual transaction value * a bid-winning price / a total amount of pre-auction individual transaction values), and
determining the post-auction individual transaction value determined to satisfy the reference transaction condition and the formula (1) as a price list after the reverse auction.

14. The computer-readable medium of claim 12, wherein
the step (a) stores a price list for each supplier attending the reverse auction, and
the step (c) comprises:
outputting the reference transaction condition to a supplier,
receiving an individual transaction value from a supplier by specifying any of the reference transaction condition and updating a price list corresponding to the supplier based on the received individual transaction value,
calculating as a bid price a total amount when assuming to perform the tentative number of times of transactions with the individual transaction value for each supplier,
outputting progress information of the reverse auction to a supplier,
selecting a supplier corresponding to a current lowest bid price as a winning bidder if a predetermined reverse auction termination condition is satisfied, and
determining the price list stored in association with the supplier selected as a winning bidder as a price list after the reverse auction.

15. The computer-readable medium of claim 12, wherein the tentative number of transaction times is set to 1 for all reference transaction conditions.

16. The computer-readable medium of claim 12, wherein the tentative number of transaction times is determined based on a buyer's purchase record in a certain past period.
